# FASCICULE DE BREVET EUROPEEN

(11) **EP 1 358 130 B1**
(45) Date de publication et mention de la délivrance du brevet: **15.07.2009**
(21) Numéro de dépôt: 02704800.8
(22) Date de dépôt: 08.02.2002
(51) Int. Cl.: C02F 1/52, C02F 9/00

(54) **PROCEDE D'EPAISSISSEMENT DES BOUES ISSUES DU TRAITEMENT D'EAU PAR FLOCULATION-DECANTATION A FLOC LESTE**
METHODE ZUM EINDICKEN VON SCHLAMM AUS WASSERBEHANDLUNG DURCH BALLASTFLOCKUNG
METHOD FOR THICKENING SLUDGE DERIVED FROM WATER TREATMENT BY FLOCCULATION-DECANTATION WITH BALLASTED FLOC

(30) Priorité: 09.02.2001 FR 0101832
(43) Date de publication de la demande: 05.11.2003
(73) Titulaire: OTV SA, 94410 Saint-Maurice (FR)
(72) Inventeur: BINOT, Patrick, F-77600 RENTILLY PAR BUSSY SAINT-GEORGES (FR)
(74) Mandataire: Larcher, Dominique
(86) Numéro de dépôt international: PCT/FR2002/000501
(87) Numéro de publication internationale: WO 2002/064512

(56) Documents cités:
- FR-A- 2 785 899
- US-A- 3 977 966
- US-A- 5 192 441

## Description

L'invention concerne le domaine du traitement des boues provenant de procédés de traitement de l'eau.

Plus précisément, l'invention concerne le domaine du traitement des boues provenant d'unités de traitement d'eau par floculation-décantation à floc lesté par du micro-sable ou par un matériau équivalent.

Dans les unités de traitement des eaux, les boues extraites des décanteurs séparant les matières décantables des eaux à traiter peuvent avoir été épaissies dans le fond du décanteur, jusqu'à des concentrations en matière sèche dépassant 15 grammes par litre, et pouvant aller jusqu'à plus de 100grammes par litre. Ces décanteurs épaississeurs comportent souvent une boucle de recirculation des boues, recirculant vers la zone de floculation une partie des boues extraites en fond du décanteur.

Cette technique présente l'inconvénient de maintenir pendant une longue période les boues dans le fond du décanteur, ce qui peut entraîner des phénomènes de fermentation et de relargage de pollution dans le décanteur.

Il est donc souvent prévu des ouvrages spécifiques à l'épaississement des boues, vers lesquels sont dirigées les boues décantées à épaissir, et qui font passer ces boues d'une concentration souvent inférieure à 10, voire 5 grammes par litre à une concentration supérieure à 15, voire 50 gramme et jusqu'à plus de 10 grammes par litre.

Ces ouvrages d'épaississement, ci-après appelés épaississeurs, se présentent comme des décanteurs dans lesquels les boues à épaissir sont introduites, tandis que les boues épaissies par l'action de la gravité, souvent avec l'aide d'une herse tournante facilitant la séparation des flocs en cours de décantation de l'eau qu'ils emprisonnent, sont extraites du fond de l'épaississeur. L'eau libérée des boues épaissies est récupérée en surverse, dans la partie supérieure de l'épaississeur.

Ces épaississeurs peuvent prendre la forme de décanteurs simples ou plus rarement de décanteurs lamellaires. Ils sont dimensionnés sur la base de l'expérience de l'homme de l'art, pour des charges au radier (division de la charge journalière en matières en suspension (MES) à épaissir, exprimées en kilogrammes de matière en suspension par jour, par la surface du fond de l'épaississeur, appelée usuellement surface au radier) qui ne dépassent pas 120kgMES/m²/j, sauf dans des cas de boues très spécifiques comme les boues de décarbonatation, très chargées en particules minérales. Ainsi que le Memento Technique de L'Eau (neuvième édition, tome 2 page 921) précise des flux massiques de 80 à 120 kgMS/m²/j en boues primaires fraîches, de 45 à 70 kgMS/m2/j en boues primaires +boues activées fraîches, et de 15 à 25 kgMS/m²/j en boues de floculation Eau Potable avec Hydroxydes métalliques (sans limon)

Dans le cas de la floculation décantation physico-chimique lestée d'un matériau granulaire, telles notamment que celles décrites dans les brevets FR 2627704 et FR2739094 de la Demanderesse, les décanteurs sont calculés sur la base de très grandes vitesses de décantation (division du débit d'eau traitée en m³/h par la surface de décantation « au miroir »), pouvant monter de 50 à 100, voire 200m/h, en traitant des eaux de concentration en MES pouvant monter à 1, voire plus de 2g MES/litre : un calcul simple montre que de tels décanteurs, produisant par m2 100kgMES/heure et par m² de surface de décantation au miroir lorsque traitant à 100m/h des eaux de concentration 1g/l, nécessiteront une surface de radier d'épaississeur de au moins 24 m² par m² de surface de décantation au miroir, lorsque l'épaississeur sera classiquement dimensionné sur la base de 100kgMES/ m²radier/jour maximum.

De telles surfaces d'épaississement sont généralement peu compatibles avec la compacité recherchée lorsque l'on emploie des décanteurs rapides à floc lesté de micro-sable.

L'objectif de la présente invention est de résoudre ces problèmes.

Cet objectif est atteint grâce à l'invention qui concerne un procédé d'épaississement des boues issues d'au moins une unité de traitement d'eau par floculation décantation à floc lesté de micro-sable ou autre matériau granulaire dense mettant en oeuvre une étape d'hydrocyclonage des boues de décantation, **caractérisé en ce qu**'il comprend les étapes successives consistant
■ une étape de dégazage des boues de surverse de l'hydrocyclonage de l'unité de floculation décantation lestée, ladite étape de dégazage étant mise en oeuvre sur une surface de dégazage correspondant à une vitesse superficielle de dégazage de moins de 100m/h ;
■ une étape d'injection d'au moins un réactif de floculation dans lesdites boues ;
■ une étape d'épaississement desdites boues dans au moins un épaississeur lamellaire, avec une charge au radier calculée sur la surface du radier de l'épaississeur supérieure à 200 kgMES/m²/jour et la concentration de boues extraites supérieure à 10 g/l.

La Demanderesse a en effet constaté que les boues issues du traitement des eaux par floculation décantation à floc lesté de lest granulaire, comme le micro-sable, ont, sous réserve d'un dégazage à la sortie de la surverse de l'hydrocyclone qui les sépare du matériau de lest recyclé, et d'une refloculation préalable, une aptitude inattendue à l'épaississement rapide des boues.

Selon une variante avantageuse, le procédé comprend une étape supplémentaire d'injection d'au moins un réactif coagulant en amont de l'injection du réactif floculant. Une telle addition permet d'obtenir, si recherchée, une amélioration de la qualité des surverses.

Préférentiellement, ladite étape-de-dégazage-est mise en oeuvre sur une surface de dégazage correspondant à une vitesse superficielle de dégazage inférieure à 60m/h.

Egalement préférentiellement, ladite étape d'injection de réactif floculant est réalisée au sein d'une zone de floculation agitée avec un temps de séjour de 10 minutes ou moins , préférentiellement 4 à 6 minutes, la surface de la zone de floculation pouvant constituer tout ou partie de la zone de dégazage.

Selon une variante avantageuse de l'invention, ladite étape d'épaississement est effectuée dans un épaississeur lamellaire dans lequel la hauteur libre sous lamelle est comprise entre 2 et 4 mètres, le procédé comprenant une étape de contrôle de la hauteur du voile de boue permettant de maintenir celui ci entre deux hauteurs pré-définies, chacune de ces hauteurs étant d'au moins 1,5 mètres.

Lorsque lesdites boues sont issues du traitement tertiaire d'eaux usées, ladite étape d'épaississement est préférentiellement menée avec une charge au radier supérieure à 300 kg/m²/jour pour une concentration de boues extraites de plus de 15g/l

Lorsque lesdites boues sont issues du traitement primaire d'eaux usées, ou de surverses d'eaux unitaires de temps de pluie, ladite étape d'épaississement est préférentiellement menée avec une charge au radier supérieure à 1000 kg/m²/jour pour une concentration de boues extraites de plus de 25g/l.

Lorsque les boues à épaissir sont issues du traitement de décantation d'eaux de surface autre qu'un traitement de décarbonatation, ladite étape d'épaississement est préférentiellement menée avec une charge au radier supérieure à 200 kg/m²/jour pour une concentration de boues extraites de plus de 10g/l.

En pratique, on peut ainsi utiliser des épaississeurs de 2 à plus de 12,5 fois plus compacts que les épaississeurs classiques dimensionnés à moins de 120 kg/m² /jour, et cela sans exiger (mais sans interdire) la présence d'une boucle de recirculation des boues entre le fond de l'épaississeur et le floculateur.

L'invention permet ainsi l'épaississement des boues de floculation décantation lestée dans des ouvrages de grande compacité, et jusqu'à des concentrations qui peuvent dépasser :
■ 20 g/l en boues de traitement tertiaire par floculation lestée d'eaux usées traitées biologiquement préalablement à la floculation lestée,
■ 3 5 g/l en boues issues d'un traitement par floculation lestée d'eaux usées primaires, ou de surverses de déversoirs d'orage.
■ 10 à plus de 100 g/l en boues issues du traitement par floculation lestée d'eau à potabiliser, avant leur filtration.

Les concentrations ci-dessus nécessitent de maintenir (dans le cas de l'extraction continue ou semi continue des boues du fond de l'épaississeur), ou de monter périodiquement (dans le cas de l'extraction périodique des boues par ouverture de la vanne de fond d'épaississeur) le voile de boue jusqu'à une hauteur d'au moins deux mètres.

On notera que de telles charges au radier imposent, suivant la concentration de boue à épaissir et des boues épaissies, de grandes vitesses au miroir (division du débit d'eau de surverse de l'épaississeur par la surface au miroir de la zone de décantation supérieure). Ces vitesses au miroir importantes sont acceptées sans pertes anormales de matières en suspension (MES) dans les eaux de surverses grâce à l'interposition de lamelles de décantation dans la partie supérieure de l'épaississeur, de manière à maintenir la vitesse de Hazen (division du débit d'eau de surverse d'épaississeur par la surface totale projetée par les lamelles sur le plan horizontal) dans des limites compatibles avec la qualité de surverse recherchée.

Selon une variante de l'invention, les eaux de surverses provenant de ladite étape d'épaississement sont retournées en tête de ladite installation de décantation lamellaire à floc lesté.

Selon une variante de l'invention, le procédé ne comprend pas d'étape de recirculation des boues provenant de ladite étape d'épaississement vers ladite étape d'injection de réactif floculant.

Selon une autre variante, le procédé comprend une étape de recirculation des boues provenant de ladite étape d'épaississement vers ladite étape d'injection de réactif floculant.

L'invention peut être mise en oeuvre dans toute installation d'épaississement lamellaire de boues issues d'au moins une unité de traitement d'eau par floculation décantation à floc lesté de micro-sable ou autre matériau granulaire dense, **caractérisée en ce qu**'elle présente : au moins une zone de dégazage pouvant être réalisée sous forme d'un ou plusieurs canaux ou bassin d'une surface totale minimum correspondant à une vitesse de dégazage de 100m/h par rapport au débit de boues entrant, des moyens d'injection d'au moins un réactif floculant et au moins un décanteur épaississeur comportant une zone lamellaire de décantation, une zone d'épaississement des boues sous lamelles, un dispositif d'extraction des boues et une zone d'extraction de l'eau de surverse clarifiée au-dessus des lamelles, la surface au radier dudit épaississeur étant inférieure à celle obtenue en divisant le flux de MES à épaissir exprimé en kg MES/jour par une charge admissible minimum de 200 kg/m²/jour.

Préférentiellement, l'installation comprend aussi des moyens d'injection d'un réactif coagulant prévus en amont desdits moyens d'injection du réactif floculant.

Selon une variante avantageuse, la surface totale maximum de ladite zone de dégazage correspond à une vitesse de dégazage de 60 m/h par rapport au débit de boues entrant.

Avantageusement, l'installation comprend au moins un bassin de floculation agité, dont la surface peut faire partie en tout ou partie de zone de dégazage.

Préférentiellement, ledit décanteur épaississeur comporte des lamelles de longueur comprise entre 0,5 mètres et 3 mètres, typiquement 1,5 mètre, avec un écartement compris entre 5 et 15 cm, préférentiellement entre 7,5 et 10 cm, dont l'angle formé avec l'horizontale est supérieur à 55°, préférentiellement 60°, et dans lequel la hauteur libre entre radier et bas des lamelles est comprise entre 2 et 4 mètres, ledit décanteur épaississeur comportant un dispositif de hersage des boues et comprenant des capteurs de contrôle de hauteur du voile de boue permettent de maintenir celui ci entre deux hauteurs pré-définies, chacune étant d'au moins 1,5 mètres.

Selon une variante, l'installation ne présente pas de boucle de recirculation de boues entre la partie inférieure de ladite zone d'épaississement et ladite zone de floculation.

Selon une autre variante, l'installation présente une boucle de recirculation, constituée d'une tuyauterie et d'une pompe à boues, recirculant une partie des boues entre la partie inférieure de ladite zone d'épaississement sous lamelles et ladite zone de floculation.

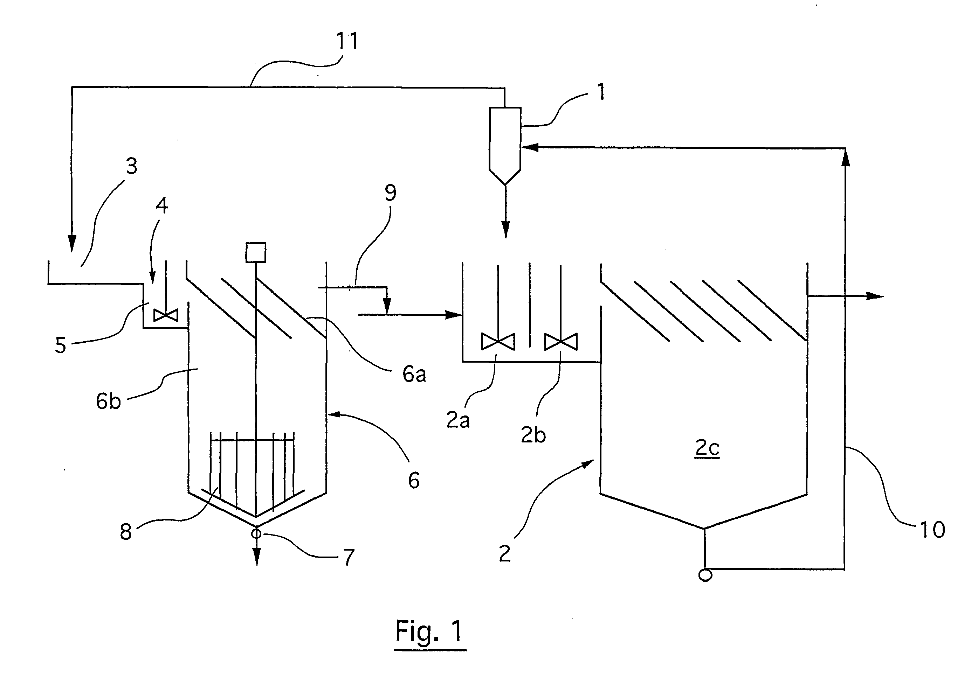

L'invention ainsi que les différents avantages qu'elle présente seront plus facilement compris grâce à la description qui va suivre d'un mode non limitatif de réalisation donné en référence à la figure 1 représentant schématiquement une installation mettant en oeuvre celle-ci.

En référence à la figure 1, une unité 2 de traitement d'eau par floculation décantation à floc lesté de micro-sable et comprend de façon classique une zone de coagulation 2a, une zone de floculation 2b et une zone de décantation lamellaire 2c. Le mélange de microsable et de boues extrait de la zone de décantation lamellaire est acheminé par une canalisation 10 vers une unité d'hydrocyclonage 1 où le micro-sable est séparé du reste des boues. Le micro-sable ainsi séparé est réinjecté dans l'unité 2 de traitement d'eau par floculation décantation.

Selon l'invention, les boues issues de l'unité d'hydrocylonage 1 sont acheminées par une canalisation 11 ou elles sont dégazées dans une zone de dégazage 3 avant d'être acheminée vers un épaississeur 6 présentant une zone lamellaire de décantation incluant des lamelles inclinées 6a, une zone d'épaississement 6b des boues sous lamelles, un dispositif d'extraction 7 des boues et une zone d'extraction de l'eau de surverse 9 clarifiée au dessus des lamelles 6a.

Cette zone 3 peut revêtir n'importe quelle forme permettant de séparer les boues des gaz qu'elles ont emprisonné durant l'hydrocyclonage, telle qu'un bassin spécifique, ou tout ou partie du canal conduisant les boues hydrocyclonées vers l'épaississeur 6. Dans le mode de réalisation représenté à la figure 1, cette zone de dégazage 3 se présente sous la forme d'un bassin prévu juste en amont de l'épaississeur 6.

La zone de dégazage 3 est dimensionnée sur la base d'une surface de dégazage supérieure au ratio du débit de boue à épaissir divisé par une vitesse superficielle de moins de 100 m/h, préférentiellement de moins de 60m/h et de façon préférée entre toutes de moins de 30 m/h.

Après dégazage, les boues sont additionnées d'un polymère généralement anionique, à raison de 0,5 à 5 g/m3 de boue à épaissir, typiquement 1 à 3 g/m3. Cette injection de polymère 4 peut être réalisée en ligne, avant injection dans l'épaississeur 6, mais est préférentiellement réalisée, comme indiqué sur la figure 1, dans un floculateur 5 légèrement agité, avec un temps de séjour hydraulique dans celui-ci de l'ordre 10 minutes ou moins, préférentiellement 4 à 6 minutes. A titre de réactif floculant, on peut utiliser un polymère à raison par exemple 0,5 à 5 mg matière active /litre de boue à épaissir

Les boues floculées sont alors introduites sous les lamelles 6a de l'épaississeur 6, ou dans les lamelles par leur tranche.

Les lamelles 6a ont une longueur comprise entre 0,5 mètres et 3 mètres, typiquement 1,5 mètre, et ont un écartement compris entre 5 et 15 cm, préférentiellement entre 7,5 et 10 cm ; leur angle avec l'horizontal est supérieur à 55° et préférentiellement égal à 60° ; leur arrangement est prévu pour assurer aux surverses une vitesse de Hazen inférieure à 10 m/h, typiquement 1 à 3m/h.

Les boues s'épaississent dans la partie inférieure de l'épaississeur 6, une hauteur libre suffisante (typiquement entre 2 et 4 mètres) étant prévue entre le bas des lamelles et la vanne d'extraction 7 des boues, vers laquelle les boues épaissies sont ramenées soit par gravité simple, dans le cas d'une trémie d'extraction pyramidale à forte pente, soit par un racleur, dans le cas d'un fond à faible pente. Une herse 8 est préférentiellement installée pour améliorer l'épaississement.

Les boues sont extraites soit en maintenant le niveau du voile de boue entre deux hauteurs pré-fixées, sous le contrôle d'un capteur de niveau de boues, soit par ouverture périodique de la vanne d'extraction, avec ou sans contrôle de la concentration des boues extraites par un capteur de concentration.

L'eau séparée des boues épaissies est récupérée en surverse 9 de l'épaississeur 6, typiquement par des goulottes assurant une bonne répartition hydraulique de l'extraction d'eau.

Suivant sa qualité, l'eau de surverse peut être mélangée directement à l'eau traitée par le floculateur décanteur à floc lesté, soit retournée en tête du traitement par floculation décantation lestée, comme représenté à la figure 1..

A titre d'exemple, un épaississeur lamellaire réalisé sur la base du principe ci dessus, avec une zone de dégazage de vitesse superficielle 60m/h, une pré-floculation par injection directe de floculant dans la tuyauterie d'alimentation en boue de l'épaississeur sous les lamelles, quatre lamelles à 60° par rapport à l'horizontale, de largeur 1m et de longueur 1,5 mètres, écartées de 75 cm, une zone d'épaississement sous lamelles de hauteur 3 mètres, de forme cylindro-pyramidale, la trémie pyramidale de fond d'épaississeur ayant des cotés inclinés de 60° par rapport à l'horizontale, sans herse dans la zone d'épaississement, avec extraction sous une hauteur de 1,5 mètres minimum, a permis d'obtenir les performances suivantes sur des boues de décantation lestée d'eaux usées municipales primaires :
■ concentration de boues à épaissir : 2 gMES/l
■ concentration des boues épaissies : > 30 gMES/l
■ charge au radier : 1000 à 1500 kgMES/m2radier/jour
■ avec des surverses de concentration < 300 mgMES/l

## Revendications

1. Procédé d'épaississement des boues issues d'au moins une unité de traitement d'eau par floculation décantation à floc lesté de micro-sable ou autre matériau granulaire dense mettant en oeuvre une étape d'hydrocyclonage des boues de décantation, **caractérisé en ce qu'**il comprend les étapes successives consistant
■ une étape de dégazage des boues de surverse de l'hydrocyclonage de l'unité de floculation décantation lestée, ladite étape de dégazage étant mise en oeuvre sur une surface de dégazage correspondant à une vitesse superficielle de dégazage de moins de 100m/h ;
■ une étape d'injection d'au moins un réactif de floculation dans lesdites boues ;
■ une étape d'épaississement desdites boues dans au moins un épaississeur lamellaire, avec une charge au radier calculée sur la surface du radier de l'épaississeur supérieure à 200 kgMES/m²/jour et la concentration de boues extraites supérieure à 10 g/l

2. Procédé d'épaississement selon la revendication 1, **caractérisé en ce qu'**il comprend une étape supplémentaire d'injection d'au moins un réactif coagulant en amont de l'injection du réactif floculant.

3. Procédé d'épaississement selon l'une des revendications 1 ou 2, **caractérisé en ce que** ladite étape de dégazage est mise en oeuvre sur une surface de dégazage correspondant à une vitesse superficielle de dégazage inférieure à 60m/h.

4. Procédé d'épaississement selon l'une quelconque des revendications 1 à 3 **caractérisé en ce que** ladite étape d'injection de réactif floculant est réalisée au sein d'une zone de floculation agitée avec un temps de séjour de 10 minutes ou moins , préférentiellement 4 à 6 minutes, la surface de la zone de floculation pouvant constituer tout ou partie de la zone de dégazage.

5. Procédé d'épaississement selon l'une quelconque des revendications 1 à 4 **caractérisé en ce que** ladite étape d'épaississement est effectuée dans un épaississeur lamellaire dans lequel la hauteur libre sous lamelle est comprise entre 2 et 4 mètres, et **en ce qu'**il comprend une étape de contrôle de la hauteur du voile de boue permettent de maintenir celui ci entre deux hauteurs pré-définies, chacune de ces hauteurs étant d'au moins 1,5 mètres.

6. Procédé d'épaississement selon l'une quelconque des revendications 1 à 5, **caractérisé en ce que** lesdites boues sont issues du traitement tertiaire d'eaux usées, et **en ce que** ladite étape d'épaississement est menée avec une charge au radiner supérieure à 300 kg/m²/jour pour une concentrations de boues extraites de plus de 15g/l

7. Procédé d'épaississement selon l'une quelconque des revendications 1 à 5, dans lequel les boues sont issues du traitement primaire d'eaux usées, ou de surverses d'eaux unitaires de temps de pluie, et en ce que ladite étape d'épaississement est menée avec une charge au radiner supérieure à 1000 kg/m²/jour pour une concentration de boues extraites de plus de 25g/l

8. Procédé d'épaississement selon l'une quelconque des revendications 1 à 5, dans lequel les boues à épaissir sont issues du traitement de décantation d'eaux de surface autre qu'un traitement de décarbonatation, et en ce que ladite étape d'épaississement est menée une charge au radier supérieure à 200 ks/m²/jour pour une concentration de boues extraites de plus de 10g/l.

9. Procédé d'épaississement selon l'une quelconque des revendications 1 à 8, dans lequel les eaux de surverses de provenant de ladite étape d'épaississement sont retournées en tête de ladite installation de décantation lamellaire à floc lesté.

10. Procédé d'épaississement selon l'une quelconque des revendications 1 à 9, **caractérisé en ce qu'**il ne comprend pas d'étape de recirculation des boues provenant de ladite étape d'épaississement vers ladite étape d'injection de réactif floculant

11. Procédé d'épaississement selon l'une quelconque des revendications 1 à 9, **caractérisé en ce qu'**il comprend une étape de recirculation des boues provenant de ladite étape d'épaississement vers ladite étape d'injection de réactif floculant.

## Claims

1. Method for thickening sludge from at least one unit for the treatment of water by flocculation-decantation with floc ballasted with microsand or another dense granular material, employing a step of hydrocycloning of the decantation sludge, **characterised in that** it comprises successive steps consisting of
■ a step of degassing the overflow sludge from the hydrocycloning of the ballasted flocculation-decantation unit, said degassing step being carried out over a degassing surface which corresponds to a superficial degassing speed of less than 100 m/h;
■ a step of injecting at least one flocculating reagent into said sludge;
■ a step of thickening said sludge in at least one lamellar thickener, with a floor load, calculated on the surface of the floor of the thickener, greater than 200 kg MIS/m²/day and the concentration of extracted sludge greater than 10 g/l.

2. Thickening method according to claim 1, **characterised in that** it comprises an additional step of injecting at least one coagulating reagent upstream of the injection of the flocculating reagent.

3. Thickening method according to either claim 1 or claim 2, **characterised in that** said degassing step is carried out over a degassing surface which corresponds to a superficial degassing speed of less than 60 m/h.

4. Thickening method according to any one of claims 1 to 3, **characterised in that** said step of injecting flocculating reagent is carried out within an agitated flocculation zone with a residence time of 10 minutes or less, preferably from 4 to 6 minutes, the surface of the flocculation zone may constitute all or part of the degassing zone.

5. Thickening method according to any one of claims 1 to 4, **characterised in that** said thickening step is carried out in a lamellar thickener in which the free height beneath the lamella is from 2 to 4 metres, and **in that** it comprises a step of monitoring the height of the sludge blanket, allowing said blanket to be maintained between two pre-defined heights, each of those heights being at least 1.5 metres.

6. Thickening method according to any one of claims 1 to 5, **characterised in that** said sludge is from tertiary wastewater treatment, and **in that** said thickening step is conducted with a floor load greater than 300 kg/m²/day for a concentration of extracted sludge of more than 15 g/l.

7. Thickening method according to any one of claims 1 to 5, in which the sludge is from primary wastewater treatment or from combined sewer overflows from times of rain, and in that said thickening step is conducted with a floor load greater than 1000 kg/m²/day for a concentration of extracted sludge of more than 25 g/l.

8. Thickening method according to any one of claims 1 to 5, in which the sludge to be thickened is from the decantation treatment of surface water other than a decarbonation treatment, and in that said thickening step is conducted with a floor load greater than 200 kg/m²/day for a concentration of extracted sludge of more than 10 g/l.

9. Thickening method according to any one of claims 1 to 8, in which the overflow water from said thickening step is returned to the head of said lamellar decantation installation with ballasted floc.

10. Thickening method according to any one of claims 1 to 9, **characterised in that** it does not comprise a step of recirculating the sludge from said thickening step to said flocculating reagent injection step.

11. Thickening method according to any one of claims 1 to 9, **characterised in that** it comprises a step of recirculating the sludge from said thickening step to said flocculating reagent injection step.

## Patentansprüche

1. Verfahren zum Eindicken von Schlämmen aus mindestens einer Einheit zur Wasserbehandlung durch Ballastflockung-Sedimentation mit Mikrosand oder einem anderen dichten körnigem Material, bei der ein Schritt der Hydrozyklonierung der Sedimentationsschlämme durchgeführt wird, **dadurch gekennzeichnet, dass** sie die folgende Abfolge von Schritten umfasst, die bestehen aus
- einem Schritt der Entgasung der Hydrozyklon-Überlaufschlämme der Einheit zur Ballastflockung-Sedimentation, wobei der Schritt der Entgasung auf einer Entgasungsoberfläche durchgeführt wird, die einer Entgasungsoberflächengeschwindigkeit von weniger als 100 m/h entspricht;
- einem Schritt der Injektion mindestens eines Flockungsreagens in die Schlämme;
- einem Schritt der Eindickung der Schlämme in mindestens einem Lamelleneindicker mit einer Sohlenfracht, berechnet auf die Oberfläche der Sohle des Eindickers, von mehr als 200 kgMIS/m²/Tag und einer Konzentration der extrahierten Schlämme von mehr als 10 g/l.

2. Verfahren zum Eindicken nach Anspruch 1, **dadurch gekennzeichnet, dass** es einen zusätzlichen Schritt der Injektion mindestens eines Koagulationsreagens oberhalb der Injektion des Flockungsreagens umfasst.

3. Verfahren zum Eindicken nach einem der Ansprüche 1 oder 2, **dadurch gekennzeichnet, dass** der Schritt der Entgasung auf einer Entgasungsoberfläche durchgeführt wird, die einer Entgasungsoberflächengeschwindigkeit von weniger als 60 m/h entspricht.

4. Verfahren zum Eindicken nach einem der Ansprüche 1 bis 3, **dadurch gekennzeichnet, dass** der Schritt der Injektion des Flockungreagens innerhalb einer Rührflockungszone mit einer Verweildauer von 10 Minuten oder weniger, bevorzugt 4 bis 6 Minuten ausgeführt wird, wobei die Oberfläche der Flockungszone die gesamte oder einen Teil der Entgasungszone bilden kann.

5. Verfahren zur Verdickung nach einem der Ansprüche 1 bis 4, **dadurch gekennzeichnet, dass** der Schritt der Verdickung in einem Lamellenverdicker durchgeführt wird, bei dem die lichte Höhe unter der Lamelle im Bereich zwischen 2 und 4 Metern liegt, und **dadurch**, dass sie einen Schritt der Kontrolle der Höhe der Schlammdecke umfasst, der es ermöglicht, diese zwischen zwei vorbestimmten Höhen zu halten, wobei jede dieser Höhen mindestens 1,5 Meter beträgt.

6. Verfahren zur Verdickung nach einem der Ansprüche 1 bis 5, **dadurch gekennzeichnet, dass** die Schlämme aus der Tertiärbehandlung von Abwässern stammen, und **dadurch** dass der Schritt der Verdickung mit einer Sohlenfracht von mehr als 300 kg/m²/Tag für eine Konzentration der extrahierten Schlämme von mehr als 15 g/l durchgeführt wird.

7. Verfahren zur Verdickung nach einem der Ansprüche 1 bis 5, bei dem die Schlämme aus der Primärbehandlung von Abwässern oder aus niederschlagsbedingten Mischwasserüberläufen stammen und **dadurch** dass der Schritt der Verdickung mit einer Sohlenfracht von mehr als 1.000 kg/m²/Tag für eine Konzentration der extrahierten Schlämme von mehr als 25 g/l durchgeführt wird.

8. Verfahren zur Verdickung nach einem der Ansprüche 1 bis 5, bei dem die zu verdickenden Schlämme aus der Sedimentationsbehandlung von Oberflächenwasser stammen, die keine Entkarbonisierungsbehandlung ist, und **dadurch** dass der Schritt der Verdickung mit einer Sohlenfracht von mehr als 200 kg/m²/Tag für eine Konzentration der extrahierten Schlämme von mehr als 10 g/l durchgeführt wird.

9. Verfahren zur Verdickung nach einem der Ansprüche 1 bis 8, bei der das Überlaufwasser, das aus dem Schritt der Verdickung stammt, an den Kopf der Anlage zur Lamellensedimentation geflockt zurückgeführt wird.

10. Verfahren zum Verdicken nach einem der Ansprüche 1 bis 9, **dadurch gekennzeichnet, dass** sie keinen Schritt der Rückführung der Schlämme, die aus dem Schritt der Verdickung stammen, zum Schritt der Injektion des Flockungsreagens umfasst.

11. Verfahren zum Verdicken nach einem der Ansprüche 1 bis 9, **dadurch gekennzeichnet, dass** sie einen Schritt der Rückführung der Schlämme, die aus dem Schritt der Verdickung stammen, zum Schritt der Injektion des Flockungsreagens umfasst.
